# EUROPEAN PATENT SPECIFICATION

(11) **EP 2 392 489 B1**
(45) Date of publication and mention of the grant of the patent: **20.05.2015**
(21) Application number: 10380129.6
(22) Date of filing: 18.10.2010
(51) Int. Cl.: B60N 2/28

(54) **Base for securing child seats in cars**
Basis zur Sicherung von Kindersitzen in Kraftfahrzeugen
Base pour fixer des sièges enfants dans des voitures

(30) Priority: 01.06.2010 ES 201030561 U
(43) Date of publication of application: 07.12.2011
(73) Proprietor: JANE, S.A., 08184 Palau Solita I Plegamans Barcelona (ES)
(72) Inventor: Jane Santamaria, Manuel, 08184 Palau Solitá i Plegamans (Barcelona) (ES)
(74) Representative: Morgades y Manonelles, Juan Antonio

(56) References cited:
- EP-A1- 1 970 247
- WO-A1-2012/146761

## Description

### OBJECT OF THE INVENTION

Base for securing child seats in cars.

### TECHNICAL FIELD OF THE INVENTION

This base may be used for different models of child seats, although it is designed to be used mainly for seat-carrycots that basically comprise a seat to which the backrest is fitted.

### BACKGROUND OF THE INVENTION

There are different models of bases that essentially comprise the fitting of a horizontally rotating frame onto which the seat is fitted and which has means to lock the seat in different positions in its rotation, whose bases have means to ensure securing of the child seats in cars, the most commonly used being the denominated "isofix" mechanisms, which have rear anchor points attached to the car structure.

EP 1970247 A1, discloses a device to fit an infant seat in a car comprising a base that is fitted to supports provided in the car and on which the infant seat is directly held, for which the base comprises notch elements, bended and circularly distributed which are fitted to a circular flange provided at the bottom of the seat, these notch elements being radially activated by a multiple cam disc.

### SUMMARY OF THE INVENTION

This invention is a base for attaching seats and carrycots forming seat and backrest, using preferably "isofix" type anchoring points and which can hold the seat or carrycot parallel to the car seat back in either direction or perpendicular to the car seat back in which the carrycot is used as a seat.

A horizontally rotating frame is fitted to the base, onto which the seat or carrycot is secured and there are means activated by a cam device to lock it in its different rotating positions.

A characteristic is that the frame has a round ring-shaped plate with grooves in its inner periphery that fit into a wedge on the base that can move round, this wedge is activated by the cam mechanism governed from either of the two opposite controls on the base.

The cam, in the wedge-locking position, is stabilized by the support of a projection on a stop on the wedge activated by means of cables linked to their respective controls.

To protect the backrest in the position in which the seat or carrycot is placed perpendicular to the car seat back, i.e. facing the back, the base has a frontal support on which the back of the child seat or carrycot can rest, according to the seat.

These and other characterizing features will be best made apparent by the following detailed description whose understanding will be made easier by the accompanying two sheets of drawings showing a practical embodiment being cited only by way of example not limiting the scope of the present invention.

### DESCRIPTION OF THE DRAWINGS

In the drawings:
Figures 1 and 2 show respectively a top and bottom plan of the base with the rotating frame locked,
Figure 3 is a detail of the unlocking mechanism for the rotating frame,
Figure 4 is a longitudinal cut-away detail of the mechanism for locking the rotating frame, and
Figure 5 is a perspective view of the base of the present invention.

### DETAILED DESCRIPTION

According to the drawings, the base (1) for securing seat-carrycots in cars comprises a chassis (2) onto which is fitted a frame (3) onto which the carrycot (not represented) is fitted, between chassis and frame there are means (4) to lock the frame (3) in different rotation positions.

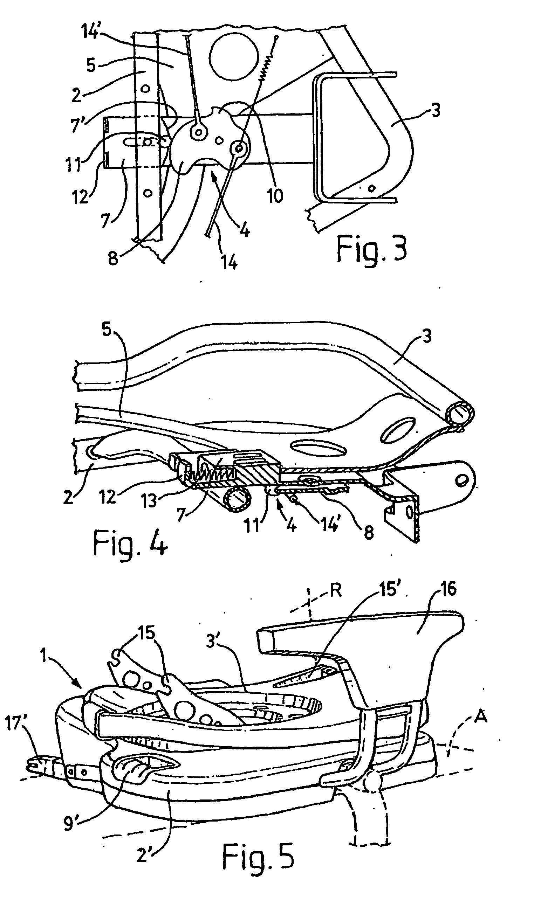

The frame (3) has a ring-shaped plate (5) with three grooves (6, 6' and 6") on its internal periphery that fit into a wedge (7) installed on the chassis (2) of the base (1), can rotate and is activated by a cam mechanism (8) controlled by either of the two opposite controls (9 and 9') on the base and can be activated from the shroud (2') of the base (1) (Fig 5).

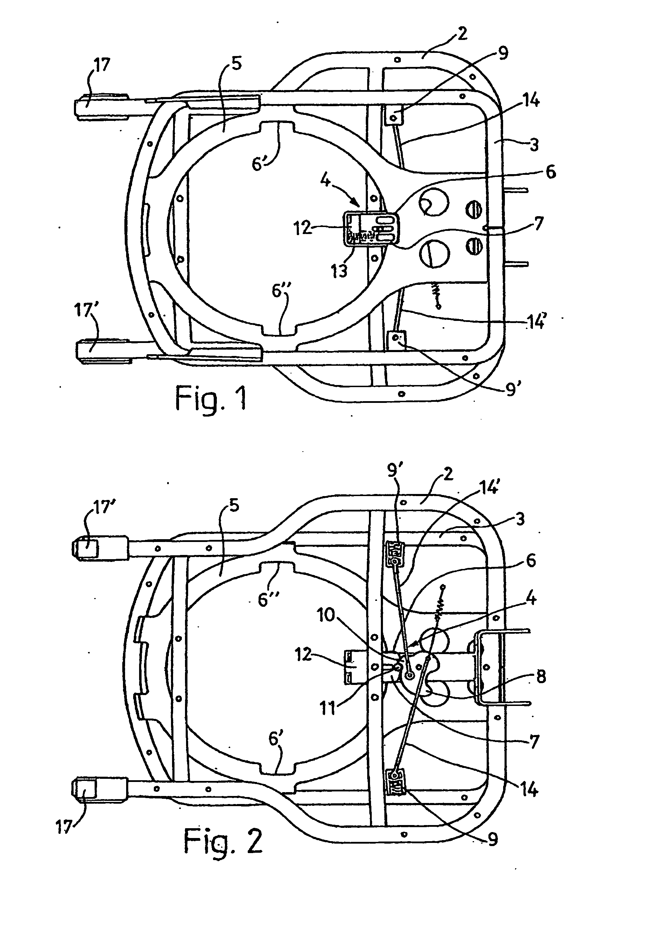

The cam (8) in the wedge-locking position (7) (Fig. 2) is stabilized by means of the support of a projection (10) from its periphery on a stop (11) placed in the active edge (7') of the wedge (7), which is convex (Fig. 3) .

The wedge (7) is moved by a box (12) and presses against the cam (8) by a spring (13), which is governed by the controls (9 and 9') through their cables (14 and 14').

The frame (3) also has a shroud (3') with means (15 and 15') for attaching the carrycot to the base (1), which has a frontal support (16) (Fig. 5) to rest the seat-carrycot in its position opposite the backrest (R) of the car seat (A).

Reference (17 and 17') indicates the "isofix" type anchoring points of the chassis (2) to the car.

This base for securing child seats in cars may thus be manufactured in any shape and size, with the most suitable means and materials and with the most convenient accessories, and the components may be replaced by others that are technically equivalent, as all of this is contained within the scope of the following claims.

## Claims

1. Base (1) for securing a child seat in a car comprising a chassis (2) an horizontally rotating frame (3) fitted to the chassis (2), onto which the seat is secured and means (4) activated by a cam mechanism (8) to lock the frame (3) in its different rotating positions, **characterised in that** the frame (3) has a round ring-shaped plate (5) with grooves (6,6',6") in its inner periphery that fit into a wedge (7) on the base chassis (2) that can move round, wherein the wedge (7) is activated by the cam mechanism (8) governed from either of the two opposite controls (9,9') on the base (1).

2. Base (1) for securing child a seat in a car according to claim 1, **characterised in that** the cam mechanism (8), in the wedge-locking position,is stabilized by the support of a projection (10) on a stop (11) on the wedge (7) activated by means of cables (14,14') linked to their respective controls.

3. Base (1) for securing a child seat in a car according to claim 1, **characterised in that** it has a frontal support (16) to rest the back of the seat.

## Patentansprüche

1. Trägerteil (1) zur Befestigung eines Kindersitzes in einem Pkw, bestehend aus einem Einbaurahmen (2), einem mit dem Einbaurahmen (2) verbundenen horizontal drehbaren Rahmen (3), auf welchem der Sitz gesichert wird, und aus durch einen Nockenmechanismus (8) betätigten Mitteln (4), um den Rahmen (3) in seinen unterschiedlichen Drehstellungen zu arretieren, **dadurch gekennzeichnet, dass** der Rahmen (3) eine runde ringförmige Scheibe (5) aufweist, die an ihrem Innenumfang mit Rillen (6, 6', 6"), die in ein Keilstück (7) am Einbaurahmen (2) passen, versehen ist und sich drehen lässt, wobei das Keilstück (7) durch den Nockenmechanismus (8) betätigt wird, der wiederum über ein beliebiges der beiden gegenüberliegenden Bedienelemente (9, 9') auf dem Trägerteil (1) gesteuert wird.

2. Trägerteil (1) zur Befestigung eines Kindersitzes in einem Pkw nach Anspruch 1, **dadurch gekennzeichnet, dass** der Nockenmechanismus (8) in der Keilarretierungsstellung mit Hilfe eines Überstandes (10) an einem am Keilstück (7) befindlichen Anschlag (11) stabilisiert und mittels an ihren jeweiligen Bedienelementen fixierten Kabeln (14, 14') betätigt wird.

3. Trägerteil (1) zur Befestigung eines Kindersitzes in einem Pkw nach Anspruch 1, **dadurch gekennzeichnet, dass** es eine Vorderstütze (16) hat, auf welcher die Rückenlehne des Sitzes ruht.

## Revendications

1. Base (1) pour fixer un siège pour enfant dans un véhicule comprenant un châssis (2), un cadre tournant horizontalement (3) monté sur le châssis (2), sur lequel le siège est fixé, et des moyens (4) actionnés par un mécanisme à came (8) pour verrouiller le cadre (3) dans ses différentes positions rotatives, **caractérisée en ce que** le cadre (3) présente une plaque en forme d'anneau circulaire (5) avec des rainures (6, 6', 6") dans sa périphérie intérieure qui s'insèrent dans une cale (7) sur le châssis (2) qui peut se déplacer autour, dans lequel la cale (7) est activée par le mécanisme à came (8) actionné depuis l'un des deux contrôles opposés (9, 9') situés sur la base (1).

2. Base (1) pour fixer un siège pour enfant dans un véhicule selon la revendication 1, **caractérisée en ce que** le mécanisme à came (8), dans la position de verrouillage de cale, est stabilisé par le support d'une saillie (10) sur une butée (11) sur la cale (7) activé par l'intermédiaire de câbles (14, 14') reliés à leurs contrôles respectifs.

3. Base (1) pour fixer un siège pour enfant dans un véhicule selon la revendication 1, **caractérisée en ce qu'**elle comporte un support frontal (16) pour soutenir l'arrière du siège.
